# FASCICULE DE BREVET EUROPEEN

(11) **EP 3 471 900 B1**
(45) Date de publication et mention de la délivrance du brevet: **20.05.2020**
(21) Numéro de dépôt: 17735191.3
(22) Date de dépôt: 08.06.2017
(51) Int. Cl.: B08B 9/00, B08B 9/043, B30B 9/22, B07B 1/55

(54) **PRESSOIR VINICOLE ET PROCÉDÉ DE NETTOYAGE DE LA CUVE D'UN TEL PRESSOIR**
WEINPRESSE UND VERFAHREN ZUR REINIGUNG DER WANNE SOLCH EINER PRESSE
WINE PRESS AND METHOD FOR CLEANING THE VAT OF SUCH A PRESS

(30) Priorité: 15.06.2016 FR 1655533
(43) Date de publication de la demande: 24.04.2019
(73) Titulaire: Pera-Pellenc S.A., 34510 Florensac (FR)
(72) Inventeur: NIERO, Rémi, 34140 Meze (FR); RIGAL, Philippe, 34510 Florensas (FR)
(74) Mandataire: Weber, Etienne Nicolas
(86) Numéro de dépôt international: PCT/FR2017/051439
(87) Numéro de publication internationale: WO 2017/216448

(56) Documents cités:
- DE-B- 1 001 589
- DE-B- 1 013 517
- FR-A1- 2 336 241
- FR-A1- 2 675 735
- FR-A1- 2 686 226

## Description

### Domaine technique

La présente invention concerne un pressoir vinicole, c'est-à-dire un pressoir susceptible de recevoir de la vendange, et en particulier des raisins, et actionnable pour en extraire du jus et/ou du moût.

L'invention concerne également un procédé de nettoyage de la cuve d'un tel pressoir.

L'invention peut être mise en œuvre pour différents types de pressoirs vinicoles et en particulier pour des pressoirs pneumatiques à membrane.

L'invention trouve ainsi des applications dans le domaine de l'équipement vinicole.

### Etat de la technique antérieure

Une illustration de l'état de la technique est donnée par les documents FR2686226, FR2 675735 et FR2336241.

Le document FR2686226 concerne un pressoir à membrane et à cuve cylindrique. Le document DE 1001589 divulgue un pressoir selon le préambule de la revendication 1.

Une membrane agencée dans une cuve du pressoir délimite dans la cuve deux chambres. Une première chambre, désignée par chambre de pressurage, est conçue pour recevoir la vendange. L'autre chambre, désignée par chambre de compression, peut être reliée à une source d'air comprimé pour appliquer la membrane contre la vendange contenue dans le chambre de pressurage et en exprimer le jus.

Lors de l'utilisation d'un tel pressoir, plusieurs phases de pressurage peuvent être alternées avec des phases dites de "rebêchage" d'un gâteau de marc formé par la vendange pressée. Cette dernière opération a lieu en libérant la pression dans la chambre de compression et en faisant tourner la cuve pour émietter le gâteau de marc dans la chambre de pressurage. Le "rebêchage" peut être suivi par une nouvelle opération de pressurage.

La cuve comprend une ou plusieurs chambres de collecte de moût, délimitées par une ou plusieurs grilles, et destinées à recueillir le moût. Ces chambres sont encore désignées par "drains". Elles s'étendent sur une partie de la circonférence de la cuve cylindrique et sont en communication avec la chambre de pressurage par l'Intermédiaire des grilles.

Après le pressurage, le marc restant dans la cuve est éliminé. La cuve peut ensuite être rechargée de vendange pour un nouveau cycle de pressurage, ou peut être nettoyée.
Le nettoyage de la cuve est une opération complexe, mais doit être effectuée avec soin pour éviter tout résidu de vendange dans la cuve et toute contamination qui pourrait en résulter. En particulier, le nettoyage des chambres de collecte de moût peut s'avérer fastidieuse en raison de leur forme, en raison de la grille qui les délimite dans la cuve, et de manière générale en raison de leur accès difficile.

Le nettoyage des chambres de collecte de moût est grandement facilité par l'utilisation d'un furet de nettoyage, et peut être automatisée en tout ou partie grâce au furet. La mise en œuvre d'un furet de nettoyage des drains est illustrée, par exemple, par le document FR2675735.

Le furet de nettoyage présente une ou plusieurs buses de projection d'eau sous pression. Il équipe l'extrémité d'un tuyau souple. Le tuyau souple est utilisé à la fois pour alimenter le furet de nettoyage en eau et pour déplacer le furet dans les chambres de collecte de moût, ou drains, qui s'étendent le long de la paroi de la cuve.

Le furet est introduit dans les chambres de collecte de moût, généralement par des souches d'évacuation du moût de la cuve. Les mêmes souches sont également mises à profit pour évacuer les eaux de lavage.

### Exposé de l'invention

Pour augmenter la capacité des chambres de collecte de moût il est, *a priori*, possible d'augmenter leur largeur, ou de remplacer plusieurs chambres de collecte de moût voisines par une chambre de collecte de moût unique plus large, de manière à offrir une surface de grille maximum entre la chambre de collecte de moût et la partie de la cuve recevant la vendange.

L'invention procède toutefois de l'identification d'un problème de nettoyage incomplet des chambres de collecte de moût et en particulier des chambres de collecte de moût larges s'étendant dans des cuves de grande longueur. Le nettoyage incomplet résulte d'une difficulté à contrôler le déplacement du furet dans les chambres de collecte de moût.

Le furet a en effet tendance à ne pas se déplacer en ligne droite dans la chambre de collecte de moût Ceci est dû au tuyau d'alimentation en eau du furet qui a lui-même tendance à s'incurver, voire à s'enrouler, notamment lorsque la chambre est large. Il en résulte un nettoyage imparfait et Incomplet de certaines régions de la chambre de collecte de moût. Cette tendance est accentuée lorsque la rigidité du tuyau d'alimentation en eau du furet est faible.

A l'inverse, un tuyau d'alimentation trop rigide complique l'introduction du furet dans les souches et compromet également le bon nettoyage des chambres de collecte de moût.

L'invention a pour but de proposer une solution à ces difficultés.

Un but est en particulier de proposer un pressoir permettant un nettoyage optimum de la ou des chambres de collecte de moût au moyen d'un furet

Un but est encore de proposer un pressoir pourvu de chambres de collecte de moût avec des surfaces d'égouttage améliorées tout en garantissant un nettoyage efficace de ces chambres.

Un but de l'Invention est aussi de proposer un pressoir permettant un nettoyage facilité des chambres de collecte de moût.

Un autre but encore est de proposer un procédé de nettoyage d'une cuve d'un pressoir et notamment d'une ou plusieurs chambres de collecte de moût de la cuve.

Pour atteindre ces buts, l'invention propose un pressoir vinicole selon la revendication 1, comprenant
- une cuve avec une chambre de pressurage de vendange,
- au moins une chambre de collecte de moût en communication avec la chambre de pressurage par l'intermédiaire d'au moins une grille,
- au moins une souche d'évacuation de moût, en communication avec la chambre de collecte de moût, et
- au moins une souche de nettoyage, configurée pour l'introduction dans la chambre de collecte de moût d'un furet de nettoyage.
Conformément à l'invention, le pressoir comprend également au moins un conduit de guidage de furet, longiligne et ajouré, associé è la souche de nettoyage, le conduit de guidage de furet s'étendant dans la chambre de collecte de moût et étant plus exigu que la chambre de collecte de moût.
Par ailleurs, le conduit de guidage comporte une pluralité de plots alignés, disposés dans la chambre de collecte de moût entre la paroi de la cuve et la grille. Les plots étayent la grille et délimitent le conduit de guidage de furet dans la chambre de collecte de moût.

La chambre de pressurage du pressoir est destinée à recevoir la vendange, et en particulier le raisin, à pressurer. Elle peut à cet effet être pourvue d'une ou plusieurs trappes pour l'introduction de la vendange et pour l'évacuation du marc au terme du pressurage.
Dans le cas particulier d'un pressoir pneumatique, la chambre de pressurage peut être pourvue d'une ou de plusieurs membranes ou vessies gonflables, pour exercer sur la vendange des forces de compression suite à une mise sous pression.

La chambre de pressurage communique avec une ou plusieurs chambres de collecte de moût par l'intermédiaire d'une ou plusieurs grilles. Par extension, on entend par grille toute paroi ajourée entre la chambre de pressurage et une chambre de collecte de moût capable de laisser passer le moût, ou le jus de raisin pressé, et de retenir le marc dans la chambre de pressurage. Ainsi la grille peut prendre notamment la forme d'un maillage ou d'un panneau perforé.
La ou les chambres de collecte de moût, encore appelées drains, peuvent être situées à l'intérieur de la cuve. Elles sont de préférence adjacentes à une paroi de la cuve. Les chambres de collecte de moût peuvent aussi être ménagées à l'extérieur de la cuve, contre la paroi de la cuve. Dans ce cas la paroi de la cuve reçoit la ou les grilles ou présente des perforations constituant la ou les grilles.

Outre leur rôle de recueillir le moût, la ou les chambres de collecte de moût servent également à évacuer le moût en le canalisant vers une ou plusieurs de souches d'évacuation de moût avec lesquelles elles sont en communication. Les souches peuvent être ménagées sur une paroi de la cuve, autour d'ouvertures pratiquées dans la cuve pour la sortie du moût. Les souches d'évacuation de moût peuvent aussi être ménagées directement sur une paroi d'une chambre de collecte de moût, notamment lorsque ces chambres sont à l'extérieur de la cuve.
Chaque chambre de collecte de moût peut être associée à une ou plusieurs souches d'évacuation de moût.
Le pressoir peut être pourvu également de souches de nettoyage pour le nettoyage de la ou des chambres de collecte de moût et/ou de la cuve. En particulier une ou plusieurs souches de nettoyage peuvent être prévues pour l'introduction dans la ou les chambres de collecte de moût d'un ou de plusieurs furets de nettoyage.

Le nettoyage s'entend essentiellement comme un lavage avec de l'eau, même si d'autres opérations de nettoyage, par exemple par de l'air sous pression associé à un autre fluide, peuvent également être envisagées. Les souches de nettoyage, outre l'introduction des furets, permettent aussi d'évacuer l'eau ou le fluide de lavage.

Les souches de nettoyage peuvent être distinctes ou non des souches d'évacuation de moût. En effet, une souche d'évacuation de moût peut aussi constituer une souche de nettoyage, lorsqu'elle est configurée pour le passage d'un furet.

Dans la description qui suit, la référence, au singulier, à une chambre de collecte de moût, à une souche d'évacuation de moût, ou à une souche de nettoyage, ne préjuge pas du nombre de chambres de collecte de moût ou du nombre de souches dont un pressoir conforme à l'invention peut être équipé.

Comme mentionné précédemment, la chambre de collecte de moût est pourvue d'un conduit de guidage du furet plus exigu que la chambre de collecte de moût. Ce conduit est également longiligne c'est-à-dire plus long que large. En d'autres termes, le conduit présente une longueur supérieure à sa section. Le conduit de guidage du furet a pour fonction de limiter les déplacements latéraux du furet dans la chambre de collecte de moût et de mieux contrôler ses déplacements.

Le conduit de guidage formé par les plots, disjoints et espacés les uns des autres, se trouve ainsi ajouré de manière à ne pas entraver le fonctionnement du furet et notamment la projection d'eau par le furet dans la chambre de collecte de moût ou dans la cuve. L'eau projetée par le furet peut en effet passer entre les plots. Il en va de même du moût qui peut passer entre les plots pour atteindre une souche d'évacuation de moût. Le conduit de guidage est plus exigu que la chambre de collecte de moût, notamment pour éviter des déviations du furet, par flexion d'un tuyau d'alimentation en eau du furet. Le conduit de guidage s'étend dans la chambre de collecte de moût pour un nettoyage efficace de cette chambre.

Grâce au conduit de guidage, la chambre de collecte de moût peut être plus étendue et présenter ainsi une plus grande grille et une plus grande surface d'échange avec la chambre de pressurage. Cette surface est encore désignée par surface d'égouttage.

Dans le cas où la chambre de collecte de moût est à l'intérieur de la cuve du pressoir, le conduit de guidage peut s'étendre de préférence entre la paroi de la cuve et la grille séparant la chambre de collecte de moût de la chambre de pressurage.

Les plots, qui délimitent le conduit de guidage, sont agencées sur une ou plusieurs lignes, rectilignes. La mise en œuvre de plots, c'est-à-dire d'éléments disjoints, pour délimiter le conduit, procure l'ajourage nécessaire pour le passage de l'eau de nettoyage et d'éventuels résidus de nettoyage. Les plots peuvent être des plots métalliques ou en matière plastique.

La forme des plots n'est pas critique. Toutefois, pour éviter un accrochage du furet, les plots présentent de préférence des parois lisses. Il s'agit, par exemple, de petits cylindres dressés.

Lorsque la chambre de collecte de moût est dans la cuve du pressoir, la grille séparant la chambre de collecte de moût et la chambre de pressurage, de même que la paroi de la cuve peuvent également former des parois délimitant le conduit de guidage de furet.

La grille peut être fixe ou non. Selon une possibilité de réalisation particulière, la grille peut être une grille amovible, et chaque plot peut être rigidement solidaire de l'un de la grille et de la paroi de la cuve.

On considère que la grille est amovible lorsqu'elle peut être entièrement retirée ou lorsqu'elle est articulée entre une position fermée et une position ouverte libérant entièrement un passage entre la chambre de collecte de moût et la chambre de pressurage.

Le fait que les plots soient solidaires soit de la grille soit de la paroi de la cuve permet le retrait de la grille ou son pivotement en position ouverte.

Les plots constituant des parois latérales du conduit de guidage de furet sont mis à profit comme des étais de la grille. Ceci permet de réaliser des chambres de collecte de moût avec une grande surface d'égouttage tout en utilisant une grille d'épaisseur réduite. En effet la grille étayée par les plots peut en effet supporter une pression élevée lors du pressurage, sans se déformer.

Le pressoir peut comporter une pluralité de chambres de collecte de moût, chaque chambre de collecte de moût étant associée à au moins une souche de nettoyage. Les souches de nettoyage, peuvent être en communication respectivement avec des conduits de guidage de furet correspondants.

La cuve du pressoir peut présenter une symétrie de révolution autour d'un axe. Ceci est le cas d'un pressoir à cuve cylindrique notamment. Dans ce cas, une pluralité de conduits de guidage de furet peuvent s'étendre le long de la paroi de la cuve de manière sensiblement parallèle audit axe. Les différents conduits de guidage peuvent s'étendre dans une même chambre de collecte de moût ou dans des chambres différentes.

Un ou plusieurs conduits de guidage de furet peuvent aussi s'étendre de manière hélicoïdale autour dudit axe et le long de la paroi de la cuve.

Selon une possibilité de réalisation particulière du pressoir, toujours avec une cuve présentant une symétrie de révolution autour d'un axe, le pressoir peut comporter :
- un bâti de support de la cuve avec une liberté de rotation autour de l'axe de la cuve,
- une pluralité de souches de nettoyage équidistantes de l'axe de la cuve et
- un dispositif d'introduction de furet de nettoyage, solidaire du bâti de support, le dispositif d'introduction de furet de nettoyage étant ménagé sur le bâti dans une position venant respectivement en alignement avec les souches de nettoyage lors d'une rotation de la cuve autour de l'axe de la cuve.

Enfin, et accessoirement, le pressoir peut comporter un furet de nettoyage équipant le dispositif d'introduction de furet.

Selon cette disposition, un même furet de nettoyage peut être utilisé pour le nettoyage successif des différentes chambres de collecte de moût, ou pour un passage successif dans différents conduits de guidage de furet d'une même chambre de collecte de moût.

Le dispositif d'introduction de furet de nettoyage peut comporter un tambour d'enroulement d'un tuyau d'alimentation en eau du furet. Le déroulement et l'enroulement du tuyau sur le tambour provoque alors le déplacement du furet dans une conduite guidage de furet de la cuve, lorsque le dispositif d'introduction de furet est aligné avec une souche de nettoyage.

Le nettoyage ou le lavage des chambres de collecte de moût peut être partiellement ou entièrement automatisé. Dans ce cas le pressoir peut comporter
- un premier moteur d'entrainement de la cuve en rotation autour de l'axe de la cuve,
- un deuxième moteur d'entrainement du dispositif d'introduction de furet de nettoyage, pour l'avancement d'un furet dans une souche et un conduit de guidage de furet associé à ladite souche, respectivement pour le retrait du furet de la souche,
- une unité de pilotage du premier moteur d'entrainement et du deuxième moteur d'entrainement, pour un nettoyage automatique de la chambre de collecte de moût.

L'unité de pilotage peut être configurée pour une commande d'une rotation de la cuve permettant d'amener successivement les différentes souches de nettoyage en face du dispositif d'introduction du furet. Elle peut à cet effet être associée à un capteur ou un codeur de position angulaire de la cuve, pour calculer respectivement un angle de rotation nécessaire entre une position actuelle et une position cible dans laquelle une souche donnée est alignée avec le dispositif d'introduction de furet

Le deuxième moteur, prévu pour l'entrainement du dispositif d'introduction de furet, peut être couplé à un galet d'entrainement, en prise avec un tuyau d'alimentation en eau du furet ou à un tambour d'entrainement de ce tuyau, par exemple.

Lorsqu'une chambre de collecte de moût est adjacente à la paroi de la cuve et que cette paroi présente une symétrie de révolution autour de l'axe de la cuve, et lorsqu'une une pluralité de souches de nettoyage angulairement espacées sont en communication avec la chambre de collecte de moût, l'unité de pilotage peut être configurée pour un alignement successif du dispositif d'introduction de furet de nettoyage avec les différentes souches de nettoyage en communication avec la chambre de collecte de moût lors d'un cycle de nettoyage, l'alignement commençant par la souche de nettoyage se trouvant dans une position la plus haute et terminant par la souche de nettoyage se trouvant dans une position la plus basse au terme d'une rotation de la cuve opérée lors du cycle de nettoyage.

Les termes "la plus haute" et la "la plus basse" s'entendent par rapport au sol sur lequel repose le bâti de support de la cuve.

Le fait de commencer par la souche la plus haute et de terminer par la souche la plus basse permet d'éviter lors du cycle de nettoyage de souiller des parties de la chambre de collecte de moût déjà nettoyées. En effet l'eau de lavage diffusée par le furet et des résidus entrainés par cette eau coulent par gravité sur des parties plus basses de la chambre de collecte de moût.

L'invention concerne également un procédé de nettoyage d'une cuve d'un pressoir selon la revendication 8, tel que décrit ci-dessus, et en particulier un pressoir à cuve cylindrique. Le procédé selon la revendication 10 comprend les étapes suivantes:
a) la rotation de la cuve autour de l'axe de cuve jusqu'à obtenir un alignement entre une souche de nettoyage avec le dispositif d'introduction de furet,
b) l'actionnement du dispositif d'introduction de furet pour l'introduction d'un furet de nettoyage dans une chambre de collecte de moût en communication avec la souche de nettoyage alignée avec le dispositif d'introduction de furet, et le déplacement du furet le long du conduit de guidage de furet associé à la souche de nettoyage alignée avec le dispositif d'introduction de furet,
c) répétition des opérations a) et b) avec la pluralité de souches.

Lors de l'étape b) plusieurs allers et retours du furet le long du conduit de guidage peuvent être opérés. Lors de ces déplacements, le furet peut être alimenté en eau ou avec un autre fluide de nettoyage.
Lorsque la chambre de collecte de moût est adjacente à une paroi de la cuve et que le pressoir comprend une pluralité de souches de nettoyage angulairement espacées, l'étape c) est de préférence opérée en commençant par la souche de nettoyage se trouvant dans une position la plus haute et en terminant par la souche de nettoyage se trouvant dans une position la plus basse au terme d'une rotation de la cuve mettant successivement en alignement les souches de nettoyage avec le dispositif d'introduction de furet.
Comme indiqué ci-dessus, ceci permet d'éviter que des résidus de vendange ou de l'eau de lavage ne soient entrainés par gravité vers des parties déjà nettoyées de la chambre de collecte de moût.

D'autres caractéristiques et avantages de l'invention ressortent de la description qui suit en référence aux figures des dessins. Cette description est donnée à titre illustratif et non limitatif.

### Brève description des figures

La figure 1 est une coupe transversale simplifiée d'un pressoir conforme à l'invention.
La figure 2 est une perspective d'une partie d'un autre pressoir conforme à l'invention.
La figure 3 est une vue à plus grande échelle d'une partie du pressoir de la figure 2 sur lequel un carter de protection est retiré.
La figure 4 est une autre vue d'une partie du pressoir de la figure 2 avec un arraché montrant l'intérieur de la cuve.

### Description détaillée de modes de mise en œuvre de l'invention

Dans la description qui suit, des parties identiques, similaires ou équivalentes des différentes figures sont repérés avec les mêmes signes de référence de manière à faciliter le report d'une figure à l'autre.

Les dessins des figures sont représentés en échelle libre.

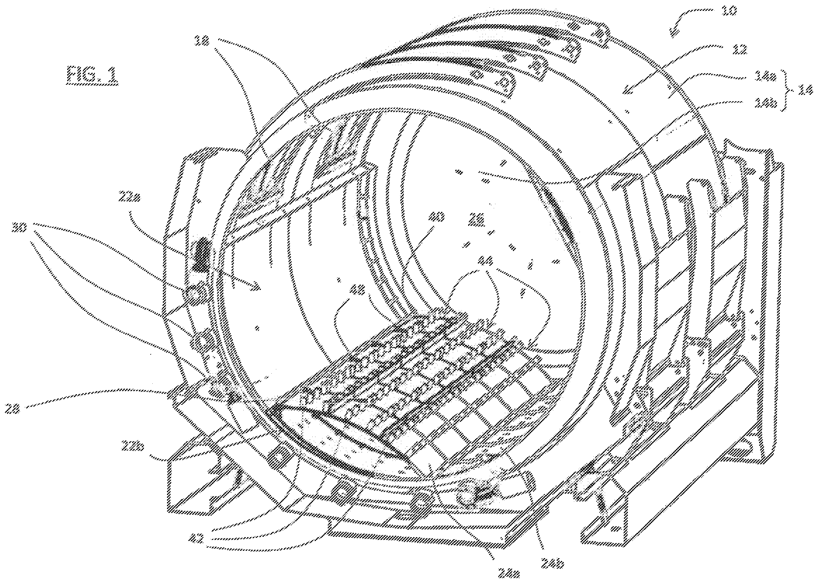

La figure 1 montre en coupe un pressoir 10. Il s'agit d'un pressoir pneumatique. Le pressoir 10 comprend une cuve 12 essentiellement cylindrique avec une symétrie de révolution autour d'un axe horizontal. La cuve comprend une paroi 14 dans laquelle sont ménagées des trappes 18 pour l'alimentation de la cuve 12 en vendange à pressurer et pour l'évacuer le marc résultant du pressurage. La paroi 14 présente un tronçon central 14a, parallèle à l'axe de la cuve et des parties d'extrémité 14b sensiblement perpendiculaires à l'axe de la cuve. L'une des parties d'extrémité n'est pas visible sur la figure 1.

A l'intérieur de la cuve 12 on peut identifier deux chambres de collecte de moût 22a, 22b. agencées le long de la paroi 14 et plus précisément sur toute la longueur du tronçon central 14a de cette paroi. Des grilles 24 et 24b séparent respectivement les chambres de collecte de moût d'une chambre de pressurage 28. Comme évoqué plus haut, la fonction essentielle de ces grilles est de retenir le marc dans la chambre de pressurage tout en laissant passer le moût ou le jus dans les chambres de collecte de moût.

Les grilles sont des grilles amovibles et articulées sur une charnière au sommet d'une paroi ou d'un septum 28 de séparation entre les deux chambres 22a, 22b de collecte de moût. Sur la figure 1, l'une des grilles 24a est représentée en position ouverte, c'est-à-dire relevée pour laisser un accès libre à la chambre de collecte de moût correspondante 22a. La seconde grille 24b est en position fermée, c'est-à-dire en place sur la chambre de collecte de moût correspondante.
L'utilisation de grilles amovibles et en particulier de grilles articulées permet d'intervenir directement dans les chambres de collecte de moût notamment en ces d'un nettoyage défaillant ou en cas d'avarie.

Le pressoir 10 est également pourvu de souches 30 en communication fluidique avec les chambres de collecte de moût 22a, 22b. Dans l'exemple de la figure 1 trois souches 30 sont associées à l'une des chambres de collecte de moût 22a et quatre souches sont associées à l'autre chambre de collecte de moût 22b. Les souches 30 sont à la fois des souches de nettoyage et des souches d'évacuation du moût hors de la cuve 12.

On peut observer sur la grille relevée 24a un certain nombre de reliefs. En particulier, des parois pleines 40 et des alignements de plots 42 parcourent la grille parallèlement à l'axe de la cuve.
Les parois pleines 40 subdivisent la chambre de collecte de moût en plusieurs compartiments 44, lorsque la grille est abaissée. Chaque compartiment étant associé à une souche 30.
De plus, chaque compartiment est encore subdivisé en deux sous-compartiments par une rangée de plots 42 disjoints.
Lorsque la grille est abaissée, l'un des sous-compartiments, en alignement avec une souche 30, ou pour le moins en communication avec une souche 30, constitue alors un conduit 48 de guidage de furet.
L'introduction d'un furet de nettoyage dans la souche 30 correspondant à un conduit de guidage 48, et le passage du furet dans le conduit de guidage 48 permet ainsi de nettoyer l'ensemble du compartiment. En effet, le sous-compartiment adjacent au conduit de guidage 48 nettoyé concomitamment avec le compartiment correspondant au conduit de guidage en raison des jours ou des espacements séparant les plots 42 de l'alignement de plots.
Dans cet exemple de réalisation, les conduits de guidage de furet 48 sont délimités par la paroi 14, 14a 14b de la cuve, la grille 24a, 24b, par une paroi pleine 44 et par un alignement de plots 42. Les conduits de guidages sont rectilignes et parallèles à l'axe de la cuve. Un agencement hélicoïdal, voire un agencement selon un tracé plus irrégulier, sont également possibles.

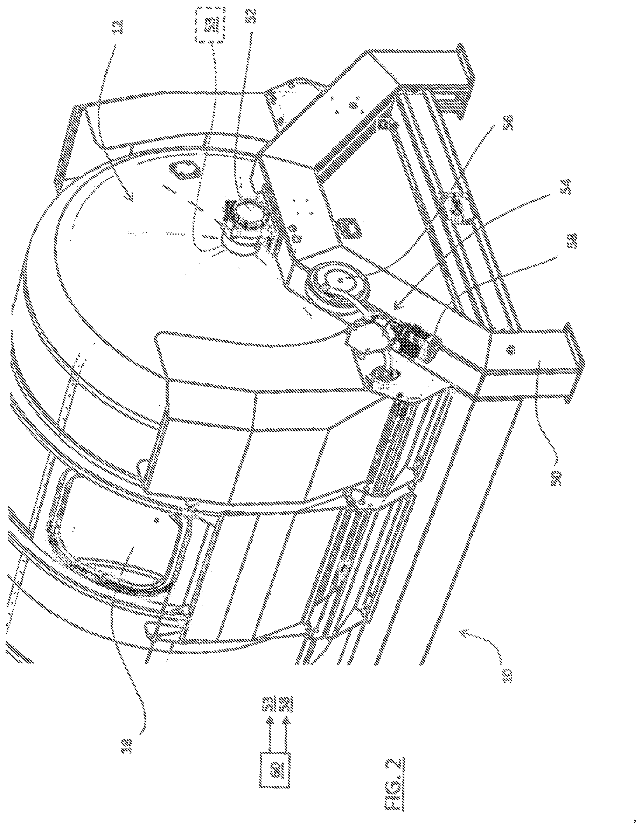

La figure 2 montre un pressoir 10, conforme à l'invention, depuis l'extérieur. On peut observer que la cuve 12 est montée sur un bâti de support 50, par l'intermédiaire de paliers 52 autorisant une rotation de la cuve autour de son axe de symétrie. La rotation peut être provoquée manuellement ou par l'intermédiaire d'un premier moteur électrique asservi 53. Le moteur 53 est indiqué de manière symbolique sur la figure.

Sur le bâti de support est monté un dispositif 54 d'introduction de furet. Ce dispositif comprend pour l'essentiel un tambour 56 d'enroulement d'un tuyau d'alimentation en eau du furet, et un deuxième moteur électrique 58. Le deuxième moteur est couplé au tuyau par l'intermédiaire d'un réducteur et d'un galet d'entraînement.

La référence 60 indique de manière symbolique une unité de pilotage, L'unité de pilotage 60 peut être logée dans une armoire de commande non représentée. Il s'agit, par exemple, d'un automate, d'une carte électronique ou d'un microcontrôleur, configurés pour commander les moteurs de la cuve et du dispositif d'entraînement de furet. En particulier l'unité de pilotage 60 est prévue pour commander une rotation de la cuve lors d'un cycle de nettoyage, afin de faire coïncider les souches successivement avec le dispositif d'entraînement de furet. Elle est encore prévue pour commander l'avancement du furet dans sa souche et dans la chambre de collecte de moût correspondante.

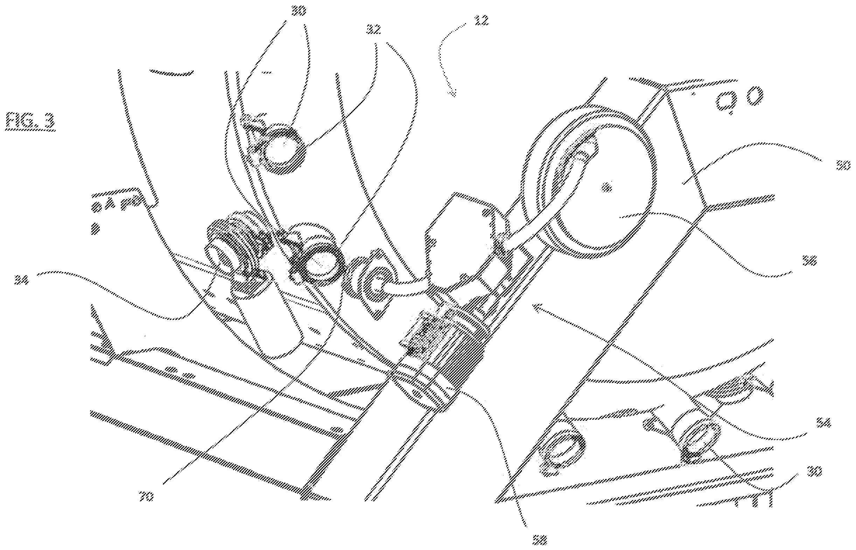

Les souches de nettoyage 30 du pressoir sont mieux visibles sur la figure 3. Elles s'étendent axialement depuis extrémité 14b de la paroi 14, et sont angulairement espacées. Les souches présentent respectivement des embouchures 32 qui viennent se positionner en face d'un furet 70 associé au dispositif d'entraînement de furet 54.
La figure 3 montre également des souches 34 prévues pour l'évacuation du moût.

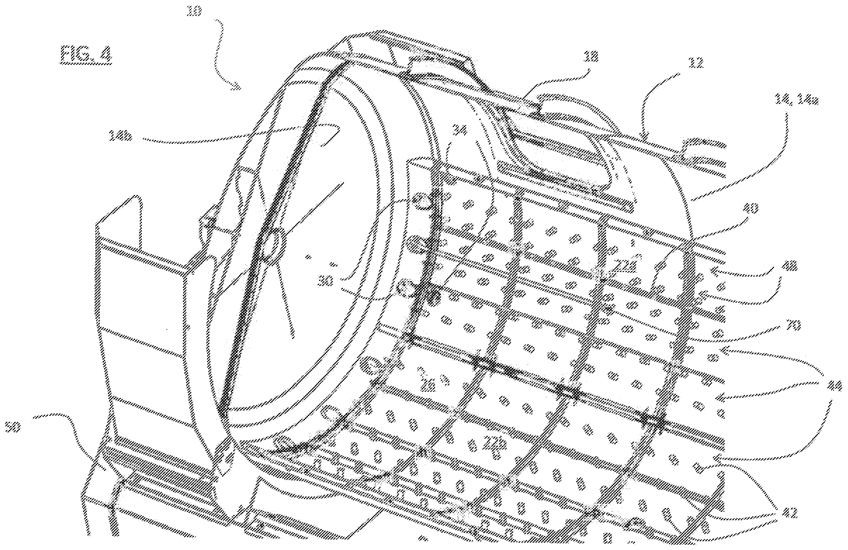

La figure 4 illustre le nettoyage d'une chambre de collecte de moût La cuve 12 du pressoir 10 de la figure 4 est équipée de deux chambres de collecte de moût 22a, 22b. Pour des raisons de clarté de la figure les grilles séparant les chambres de collecte de moût et la chambre de pressurage 28 sont retirées.
On distingue également les souches de nettoyage 30, et plus précisément leur jonction avec les chambres de collecte de moût. La référence 34 indique les souches d'évacuation de moût qui débouchent également dans les chambres de collecte de moût.
Chaque chambre de collecte de moût 22a, 22b présente plusieurs alignements de plots 42 qui subdivisent la chambre en compartiments 44. Dans l'exemple illustré, et contrairement à la figure 1, les plots sont solidaires de la paroi 14,14a de la cuve 12 et non de la grille.
Les compartiments 44 alignés avec les souches de nettoyage 30 constituent des conduits de guidage 48 de furet ces compartiments s'étendent de manière longiligne entre les parties d'extrémité 14b de la paroi de la cuve 12.
La figure 4 montre un furet 70 avançant dans l'un des conduits de guidage 48. Les plots 42 délimitant le conduit de guidage permettent au furet d'avancer sensiblement en ligne droite le long de la paroi 14 de la cuve 12, et parallèlement à l'axe de la cuve, et ainsi d'atteindre la paroi de la cuve opposée à la paroi d'extrémité portant les souches de nettoyage.
De l'eau sous pression, diffusée par le furet permet de nettoyer la partie de la chambre de collecte de moût correspondant au conduit de guidage 48. Elle permet également de nettoyer les compartiments 44 voisins de la conduite de guidage. En effet l'ajourage du conduit de guidage 48 réalisé par l'espacement des plots d'un alignement de plots, permet à l'eau de venir nettoyer les compartiments voisins et permet aux reliefs de nettoyage de rejoindre la souche de nettoyage correspondante pour leur évacuation.

Lorsque, comme le montre la figure 4, chaque chambre de collecte de moût est associée à plusieurs souches, le nettoyage est effectué en partant de la souche la plus haute, pour terminer avec la souche la plus basse, selon le sens de rotation de la cuve.

## Revendications

1. Pressoir vinicole (10) comprenant :
- une cuve (12) avec une chambre de pressurage de vendange (26),
- au moins une chambre de collecte de moût (22a,22b) en communication avec la chambre de pressurage par l'intermédiaire d'au moins une grille (24a,24b),
- au moins une souche d'évacuation de moût (30, 34), en communication avec la chambre de collecte de moût,
- au moins une souche de nettoyage (30), configurée pour l'introduction dans la chambre de collecte de moût d'un furet de nettoyage, comprenant :
- au moins un conduit de guidage (48) de furet, longiligne et ajouré, associé à la souche de nettoyage (30),
dans lequel :
- le conduit de guidage de furet (48) s'étend dans la chambre de collecte de moût,
- le conduit de guidage de furet (48) est plus exigu que la chambre de collecte de moût, **caractérisé en ce que**
- le conduit de guidage de furet (48) comprend une pluralité de plots (42) alignés disposés dans la chambre de collecte de moût (22a, 22b) entre la paroi de la cuve (14,14a) et la grille (24a, 24b), les plots étayant la grille et délimitant le conduit de guidage de furet.

2. Pressoir selon la revendication 1, dans lequel la grille (24a,24b) est une grille amovible, et dans lequel chaque plot (42) est rigidement solidaire de l'un de la grille et de la paroi de la cuve.

3. Pressoir selon l'une quelconque des revendications précédentes, avec une pluralité de chambres de collecte de moût (22a,22b), chaque chambre de collecte de moût étant associée à au moins une souche de nettoyage (30).

4. Pressoir selon l'une quelconque des revendications précédentes, dans lequel la souche d'évacuation de moût constitue la souche de nettoyage.

5. Pressoir selon l'une quelconque des revendications précédentes, dans lequel la cuve présente (12) une symétrie de révolution autour d'un axe, et dans lequel une pluralité de conduits de guidage de furet (48) s'étendent le long de la paroi de la cuve (14,14a) de manière sensiblement parallèle audit axe.

6. Pressoir selon l'une quelconque des revendications 1 à 4, dans lequel la cuve présente une symétrie de révolution autour d'un axe, au moins un conduit de guidage de furet s'étendant de manière hélicoïdale autour dudit axe et le long de la paroi de la cuve.

7. Pressoir selon l'une quelconque des revendications précédentes, dans lequel la cuve (12) présente une symétrie de révolution autour d'un axe, le pressoir comprenant :
- un bâti de support (50) de la cuve avec une liberté de rotation autour de l'axe de la cuve,
- une pluralité de souches de nettoyage (30) équidistantes de l'axe de la cuve
- un dispositif (54) d'introduction de furet de nettoyage, solidaire du bâti de support (50), le dispositif d'introduction de furet de nettoyage étant ménagé sur le bâti dans une position venant respectivement en alignement avec les souches de nettoyage (30) lors d'une rotation de la cuve autour de l'axe de la cuve.

8. Pressoir selon la revendication 7, comprenant :
- un premier moteur (56) d'entrainement de la cuve (12) en rotation autour de l'axe de la cuve,
- un deuxième moteur d'entrainement (58) du dispositif d'introduction de furet de nettoyage, pour l'avancement d'un furet dans une souche et un conduit de guidage de furet associé à ladite souche, respectivement pour le retrait du furet de la souche,
- une unité de pilotage (60) du premier moteur d'entrainement et du deuxième moteur d'entraînement, pour un nettoyage automatique de la chambre de collecte de moût.

9. Pressoir selon la revendication 8, dans lequel la chambre de collecte de moût (22a,22b) est adjacente à une paroi (14,14a) de la cuve (12) présentant une symétrie de révolution autour de l'axe de la cuve, et dans lequel une pluralité de souches de nettoyage (30) angulairement espacées sont en communication avec la chambre de collecte de moût, l'unité de pilotage (60) étant configurée pour un alignement successif du dispositif d'introduction de furet de nettoyage avec les différentes souches de nettoyage en communication avec la chambre de collecte de moût lors d'un cycle de nettoyage, l'alignement commençant par la souche de nettoyage se trouvant dans une position la plus haute et terminant par la souche de nettoyage se trouvant dans une position la plus basse au terme d'une rotation de la cuve opérée lors du cycle de nettoyage.

10. Procédé de nettoyage d'une cuve d'un pressoir selon la revendication 8, comprenant les étapes suivantes:
a) la rotation de la cuve autour de l'axe de cuve jusqu'à obtenir un alignement entre une embouchure d'une souche de nettoyage avec le dispositif d'introduction de furet,
b) actionnement du dispositif d'introduction de furet pour l'introduction d'un furet de nettoyage dans une chambre de collecte de moût en communication avec la souche de nettoyage alignée avec le dispositif d'introduction de furet, et le déplacement du furet le long du conduit de guidage de furet associé à la souche de nettoyage alignée avec le dispositif d'introduction de furet,
c) répétition des opérations a) et b) avec la pluralité de souches.

11. Procédé de nettoyage selon la revendication 10, d'une cuve d'un pressoir dans lequel la chambre de collecte de moût est adjacente à une paroi de la cuve, et comprenant une pluralité de souches de nettoyage angulairement espacées, en communication avec la chambre de collecte de moût, dans lequel l'étape c) est opérée en commençant par la souche de nettoyage se trouvant dans une position la plus haute et en terminant par la souche de nettoyage se trouvant dans une position la plus basse au terme d'une rotation de la cuve mettant successivement en alignement les souches de nettoyage avec le dispositif d'introduction de furet.

## Patentansprüche

1. Weinpresse (10), umfassend:
- eine Wanne (12) mit einer Presskammer (28) für die Weinlese,
- mindestens eine Auffangkammer für den Most (22a, 22b) in Kommunikation mit der Presskammer über mindestens ein Gitter (24a, 24b),
- mindestens einen Abschnitt zum Ableiten des Mosts (30, 34), der in Kommunikation mit der Auffangkammer für den Most steht,
- mindestens einen Reinigungsabschnitt (30), der dazu konfiguriert ist, eine Reinigungsbürste in der Auffangkammer für den Most einzugeben,
umfassend:
- mindestens eine längliche und perforierte Führungsleitung (48) für die Bürste, die mit dem Reinigungsabschnitt (30) verbunden ist,
wobei:
- sich die Führungsleitung (48) für die Bürste in der Auffangkammer für den Most erstreckt,
- die Führungsleitung (48) für die Bürste enger als die Auffangkammer für den Most ist, **dadurch gekennzeichnet, dass**
- die Führungsleitung (48) für die Bürste eine Vielzahl von ausgerichteten Kontaktstellen (42) umfasst, die in der Auffangkammer für den Most (22a, 22b) zwischen der Wand der Wanne (14, 14a) und dem Gitter (24a, 24b) angeordnet sind, wobei die Kontaktstellen das Gitter abstützen und die Führungsleitung für die Bürste abgrenzen.

2. Presse nach Anspruch 1, wobei das Gitter (24a, 24b) ein abnehmbares Gitter ist und wobei jede Kontaktstelle (42) fest mit einem von dem Gitter und der Wand der Wanne verbunden ist.

3. Presse nach einem der vorhergehenden Ansprüche mit einer Vielzahl von Auffangkammern für den Most (22a, 22b), wobei jede Auffangkammer für den Most mit mindestens einem Reinigungsabschnitt (30) verbunden ist.

4. Presse nach einem der vorhergehenden Ansprüche, wobei der Abschnitt zum Ableiten des Mosts den Reinigungsabschnitt bildet.

5. Presse nach einem der vorhergehenden Ansprüche, wobei die Wanne (12) eine Rotationssymmetrie um eine Achse aufweist und wobei sich eine Vielzahl von Führungsleitungen (48) für die Bürste im Wesentlichen parallel zur Achse entlang der Wand der Wanne (14, 14a) erstreckt.

6. Presse nach einem der Ansprüche 1 bis 4, wobei die Wanne eine Rotationssymmetrie um eine Achse aufweist, wobei sich mindestens eine Führungsleitung der Bürste schraubenförmig um die Achse und entlang der Wand der Wanne erstreckt.

7. Presse nach einem der vorhergehenden Ansprüche, wobei die Wanne (12) eine Rotationssymmetrie um eine Achse aufweist, wobei die Presse Folgendes umfasst:
- einen Stützrahmen (50) der Wanne mit einer Rotationsfreiheit um die Achse der Wanne,
- eine Vielzahl von Reinigungsabschnitten (30), die gleichweit von der Achse der Wanne entfernt sind,
- eine Vorrichtung (54) zur Eingabe der Reinigungsbürste, die fest mit dem Stützrahmen (50) verbunden ist, wobei die Vorrichtung zur Eingabe der Reinigungsbürste in einer Position auf den Rahmen gepasst ist, die jeweils in Ausrichtung mit den Reinigungsabschnitten (30) bei einer Rotation der Wanne um die Achse der Wanne gelangt.

8. Presse nach Anspruch 7, umfassend:
- einen ersten Antriebsmotor (56) der Wanne (12), der um die Achse der Wanne rotiert,
- einen zweiten Antriebsmotor (58) der Vorrichtung zur Eingabe der Reinigungsbürste für den Vorschub einer Bürste in einem Abschnitt und einer Führungsleitung für die Bürste, die mit dem Abschnitt verbunden ist, bzw. für den Abzug der Bürste aus dem Abschnitt,
- eine Steuereinheit (60) des ersten Antriebsmotors und des zweiten Antriebsmotors für eine automatische Reinigung der Auffangkammer für den Most.

9. Presse nach Anspruch 8, wobei die Auffangkammer für den Most (22a, 22b) an eine Wand (14, 14a) der Wanne (12) angrenzt, die eine Rotationssymmetrie um die Achse der Wanne aufweist, und wobei eine Vielzahl von Reinigungsabschnitten (30), die winkelig beabstandet sind, in Kommunikation mit der Auffangkammer für den Most steht, wobei die Steuereinheit (60) dazu konfiguriert ist, die Vorrichtung zur Eingabe der Reinigungsbürste bei einem Reinigungszyklus nacheinander auf die verschiedenen Reinigungsabschnitte auszurichten, die in Kommunikation mit der Auffangkammer für den Most bei einem Reinigungszyklus stehen, wobei die Ausrichtung damit beginnt, dass sich die Reinigungsbürste in einer obersten Position befindet, und damit endet, dass sich die Reinigungsbürste zu Ende einer Rotation der Wanne, die beim Reinigungszyklus ausgeführt wird, in einer untersten Position befindet.

10. Verfahren zur Reinigung einer Wanne einer Presse nach Anspruch 8, das die folgenden Schritte umfasst:
a) Rotieren der Wanne um die Achse der Wanne bis zum Erzielen einer Ausrichtung zwischen einer Öffnung eines Reinigungsabschnitts und der Vorrichtung zur Eingabe der Bürste,
b) Betätigen der Vorrichtung zur Eingabe der Bürste für die Eingabe einer Reinigungsbürste in eine Auffangkammer für den Most in Kommunikation mit dem Reinigungsabschnitt, der mit der Vorrichtung zur Eingabe der Bürste ausgerichtet ist, und Verschieben der Bürste entlang der Führungsleitung der Bürste, die mit dem Reinigungsabschnitt verbunden ist, der mit der Vorrichtung zur Eingabe der Bürste ausgerichtet ist,
c) Wiederholen der Vorgänge a) und b) mit der Vielzahl von Abschnitten.

11. Verfahren zur Reinigung nach Anspruch 10 von einer Wanne einer Presse, in der die Auffangkammer für den Most an eine Wand der Wanne angrenzt und eine Vielzahl von winkelig beabstandeten Reinigungsabschnitten umfasst, die in Kommunikation mit der Auffangkammer für den Most stehen, wobei der Schritt c) damit beginnend, dass sich der Reinigungsabschnitt in einer höchsten Position befindet, und damit endend, dass sich der Reinigungsabschnitt zu Ende einer Rotation der Wanne in einer niedrigsten Position befindet, ausgeführt wird, wodurch die Reinigungsabschnitte nacheinander auf die Vorrichtung zur Eingabe der Bürste ausgerichtet werden.

## Claims

1. A wine press (10) comprising:
- a vat (12) with a grape pressing chamber (26),
- at least one must collection chamber (22a, 22b) communicating with the pressing chamber by way of at least one grille (24a, 24b),
- at least one must discharge stub (30, 34) communicating with the must collection chamber,
- at least one cleaning stub (30) configured for introduction into the must collection chamber of a cleaning ferret, comprising:
- at least one slender apertured ferret guide conduit (48) associated with the cleaning stub (30), wherein:
- the ferret guide conduit (48) extends in the must collection chamber,
- the ferret guide conduit (48) is more confined than the must collection chamber, **characterised in that**
- the ferret guide conduit (48) comprises a plurality of aligned studs (42) disposed in the must collection chamber (22a, 22b) between the wall of the vat (14, 14a) and the grille (24a, 24b), the studs supporting the grille and delimiting the ferret guide conduit.

2. A press according to claim 1 wherein the grille (24a, 24b) is a removable grille and wherein each stud (42) is rigidly fixed with respect to one of the grille and the wall of the vat.

3. A press according to any one of the preceding claims with a plurality of must collection chambers (22a, 22b), each must collection chamber being associated with at least one cleaning stub (30).

4. A press according to any one of the preceding claims wherein the must discharge stub constitutes the cleaning stub.

5. A press according to any one of the preceding claims wherein the vat (12) has a symmetry of revolution about an axis and wherein a plurality of ferret guide conduits (48) extend along the wall of the vat (14, 14a) in substantially parallel relationship with said axis.

6. A press according to any one of claims 1 to 4 wherein the vat has a symmetry of revolution about an axis, at least one ferret guide conduit extending helicoidally around said axis and along the wall of the vat.

7. A press according to any one of the preceding claims wherein the vat (12) has a symmetry of revolution about an axis, the press comprising:
- a support framework (50) for the vat with a freedom for rotation about the axis of the vat,
- a plurality of cleaning stubs (30) equidistant from the axis of the vat, and
- a device (54) for introduction of the cleaning ferret, that is fixed with respect to the support framework (50), the cleaning ferret introduction device being provided on the framework in a position which respectively comes into alignment with the cleaning stubs (30) upon rotation of the vat about the axis of the vat.

8. A press according to claim 7 comprising:
- a first motor (56) for driving the vat (12) in rotation about the axis of the vat,
- a second drive motor (58) for the cleaning ferret introduction device, for advancing a ferret in a stub and a ferret guide conduit associated with said stub for withdrawal of the ferret from the stub respectively, and
- a pilot control unit (60) for the first drive motor and the second drive motor for automatic cleaning of the must collection chamber.

9. A press according to claim 8 wherein the must collection chamber (22a, 22b) is adjacent to a wall (14, 14a) of the vat (12) having a symmetry of revolution about the axis of the vat and wherein a plurality of angularly spaced cleaning stubs (30) are in communication with the must collection chamber, the pilot control unit (60) being configured for successive alignment of the cleaning ferret introduction device with the different cleaning stubs in communication with the must collection chamber in a cleaning cycle, the alignment beginning with the cleaning stub in a position which is the highest and concluding with the cleaning stub in a position which is the lowest at the end of a rotation of the vat implemented in the cleaning cycle.

10. A process for cleaning a vat of a press according to claim 8 comprising the following steps:
a) rotation of the vat about the axis of the vat until achieving an alignment between a mouth opening of a cleaning stub with the ferret introduction device,
b) actuation of the ferret introduction device for introduction of a cleaning ferret into the must collection chamber in communication with the cleaning stub aligned with the ferret introduction device and displacement of the ferret along the ferret guide conduit associated with the cleaning stub aligned with the ferret introduction device, and
c) repetition of operations a) and b) with the plurality of stubs.

11. A cleaning process according to claim 10 for a vat of a press wherein the must collection chamber is adjacent to a wall of the vat and comprising a plurality of angularly spaced cleaning stubs in communication with the must collection chamber, wherein step c) is carried out by beginning with the cleaning stub which is in a position that is the highest and concluding with the cleaning stub which is in a position that is the lowest at the end of a rotation of the vat successively aligning the cleaning stubs with the ferret introduction device.
